# EUROPEAN PATENT APPLICATION

(11) **EP 2 868 357 A1**
(43) Date of publication of application: **06.05.2015**
(21) Application number: 14190455.7
(22) Date of filing: 27.10.2014
(51) Int. Cl.: A63G 31/00, B25J 9/00, A63J 7/00

(54) **Self-propelled puppet, particularly of the type for simulating a rider astride a bipedal animal**

(30) Priority: 29.10.2013 IT AR20130044
(71) Applicant: Bono, Stefano, 56038 Ponsacco (PI) (IT)
(72) Inventor: Bono, Stefano, 56038 Ponsacco (PI) (IT)
(74) Representative: Modiano, Micaela Nadia

(57) **Abstract**

A self-propelled puppet (1), particularly of the type for simulating a rider astride a bipedal animal, comprising a supporting structure (2) that is adapted to define the shape and features of an animal or the like and an external covering (4) that covers the supporting structure (2) so as to define the appearance of the animal or the like that is represented; the supporting structure (2) defines internally a compartment (7) that is adapted to accommodate at least partially the body of at least one user (8) who plays the part of a rider astride the animal or the like that is represented; the self-propelled puppet comprises at least two stilts (12) that are associated with the rear limbs (11) of the animal or the like that is represented, extending substantially from the ground and ending proximate to the lower portion of the supporting structure (2) for the support of the user (8) so as to allow the movement of the self-propelled puppet (1) by the user (8) who is standing on the two stilts (12); the supporting structure (2) has openings respectively at its upper portion, so as to make the trunk of the user (8) protrude from the back of the animal or the like that is represented, and at the lower portion, so as to allow the free movement of the two stilts (12); the external covering (4) comprises at least two fake human legs (9) that extend at the waist of the user (8) and are arranged laterally to the rib cage of the animal or the like that is reproduced, so as to simulate the legs of the rider.

## Description

The present invention relates to a self-propelled puppet, particularly of the type for simulating a rider astride a bipedal animal.

Nowadays, in many entertainment shows, self-propelled puppets are used which are operated directly by actors who are inside them, in order to act as a tool for entertainment of/interaction with the audience so as to make the latter increasingly involved in the show and in order to increase the level of interest of the show.

Such puppets, whose nature can vary according to the theme of the show, can typically be distinguished in two macrocategories.

The first macrocategory includes puppets that consist substantially of a costume that can be worn by one or more actors and which, generally, is made of fabric or the like in such a manner as to be extremely light and sufficiently ergonomic, so as to follow the motion of the actor or actors that are wearing it, sufficiently fluidly.

In such puppets, in which there can be decorative elements that are adapted to define details of appearance of greater or lesser importance of the figure represented, the figure has a very humanoid appearance in its body proportions, in that it closely follows the nature of the human body of the actor or actors that are wearing it.

In this first macrocategory we can therefore include all puppets that represent fantastic creatures with a humanoid appearance, i.e. which have bodies and body proportions similar to those of a human being.

For example, this first macrocategory can include all puppets used in the great theme parks and adapted to reproduce the protagonists of stories for children, and/or theme park mascots.

The second macrocategory that was mentioned previously comprises instead all puppets adapted to reproduce living creatures and/or animals with a more or less convincing appearance.

This second type of puppets, which are much less common than the previous type in that they are more complex to make, are typically provided with a supporting structure that is adapted to define the general features of the creature reproduced and with a plurality of elements, articulated to the supporting structure, which are adapted to define the peripheral portions of the creature reproduced.

In more detail, the supporting structure, which is covered with fabrics and decorative elements that are adapted to define the skin of the creature reproduced, internally delimits a compartment for the accommodation of an actor, which is adapted to manipulate the puppet.

Inevitably, in this case too, the design of the puppet must be carried out in consideration of the space occupation of the body of the actor, thus coming into conflict with all the restrictions dictated by the anatomy of the human body.

In fact, although most living creatures present and past have a similar anatomy to that of a human being, i.e. a body with four limbs and a head, with the exception of some primates, no animals exist or have existed which have the exact proportions of a human being.

Owing to the above problems, many puppets are dimensioned in such a manner as to have a very big body, such as to almost completely contain the body of an actor so as to hide the presence thereof from the view of the audience, allowing only part of the lower limbs of the actor to protrude, which are necessary to command and manipulate the puppet.

For example, puppets are known that reproduce bipedal animals which comprise a supporting structure that reproduces the upper part of the animal, i.e. body, neck, head, tail and upper limbs, and are hollow in such a manner as to be worn on the shoulders of an actor, whose presence is hidden inside the puppet.

In this case, the legs of the actor protrude from the lower part of the supporting structure and, suitably dressed, directly simulate the rear limbs of the animal while the rest of the body of the actor remains accommodated and hidden inside the body of the bipedal animal.

Despite the fact that the actor can be provided with suitable footwear that are adapted to simulate as far as possible the end part of the lower limbs of a bipedal animal, this particular example of a conventional puppet, and of the conventional puppets described previously, are not devoid of drawbacks, including the fact that they are not capable of convincingly reproducing the features and motion of the creature or of the animal that they represent.

Another drawback of conventional puppets consists in that, since the actors are contained within the body of the puppet, the latter necessitates the presence of slits that are arranged at the eyes of the actor and are adapted to allow such actor to see what or who is in the immediate vicinity.

Inevitably, however, the field of view offered to the actor by way of these slits remains very limited and insufficient in order to give the actor a complete overview of the surrounding environment.

Another drawback of conventional puppets consists in that, in order to conceal the presence of actors within them and in order to simulate the motion of the creature or of the animal represented, the actors are very often forced to assume extremely uncomfortable postures that preclude using the puppet for prolonged times.

Another drawback of conventional puppets consists in that in order to allow the movement of the individual body parts of the creature or of the animal that such puppets represent, the puppets are provided with complicated kinetic mechanisms, sometimes even motorized, which considerably weigh down the entire supporting structure, while making all the weight bear on the actor who is manipulating the puppet, further increasing his/her effort.

The aim of the present invention consists in providing a self-propelled puppet provided with technical contrivances that are such as to solve the drawbacks and overcome the limitations described above, thus enabling the representation/simulation of creatures and/or animals in an extremely convincing manner, from the point of view both of features and of motion.

Within this aim, an object of the present invention consists in providing a self-propelled puppet that is particularly adapted to the reproduction of bipedal animals such as Jurassic reptiles, Jurassic and/or present-day birds, mythological creatures and fantastic creatures.

Another object of the present invention consists in providing a self-propelled puppet that makes it possible to provide the actor who manipulates it with an optimal 360° range of vision.

A further object of the present invention is to provide a self-propelled puppet that is extremely light and free from any type of motorization, while at the same time ensuring the capacity to move the individual body portions that it represents, in an extremely convincing and natural manner.

Another object of the present invention consists in providing a self propelled puppet in which the actor who is manipulating it can assume extremely relaxed and natural postures that are such as to allow the prolonged use of the puppet.

This aim and these and other objects which will become better apparent hereinafter are achieved by a self-propelled puppet, particularly of the type for simulating a rider astride a bipedal animal, comprising a supporting structure that is adapted to define the shape and features of an animal or the like and an external covering that covers said supporting structure so as to define the appearance of said animal or the like, said supporting structure delimiting internally a compartment adapted to accommodate at least partially the body of at least one user who plays the part of a rider astride said animal or the like, characterized in that it comprises at least two stilts associated with the rear limbs of said animal or the like, extending substantially from the ground and ending proximate to the lower portion of said supporting structure for the support of said at least one user so as to allow the movement of said self-propelled puppet by said at least one user who is standing on said at least two stilts, said supporting structure having openings respectively at its upper portion, so as to make the trunk of said at least one user protrude from the back of said animal or the like, and at said lower portion, so as to allow the free movement of said at least two stilts, said external covering comprising at least two fake human legs that extend at the waist of said at least one user and are arranged laterally to the rib cage of said animal or the like so as to simulate the legs of said rider.

Further characteristics and advantages of the invention will become better apparent from the detailed description of a preferred, but not exclusive, embodiment of a self-propelled puppet, particularly of the type for simulating a rider astride a bipedal animal, according to the invention, illustrated by way of non-limiting example in the accompanying drawings, wherein:
Figure 1 is a perspective view of a self-propelled puppet, according to the invention, representing a Jurassic bipedal reptile, of the theropod type, ridden by a rider;
Figure 2 is a transparent perspective view of the self-propelled puppet shown in Figure 1;
Figure 3 is a perspective view of the self-propelled puppet shown in the previous figures, with its external covering removed;
Figure 4 is a transparent side view of the self-propelled puppet shown in the previous figures;

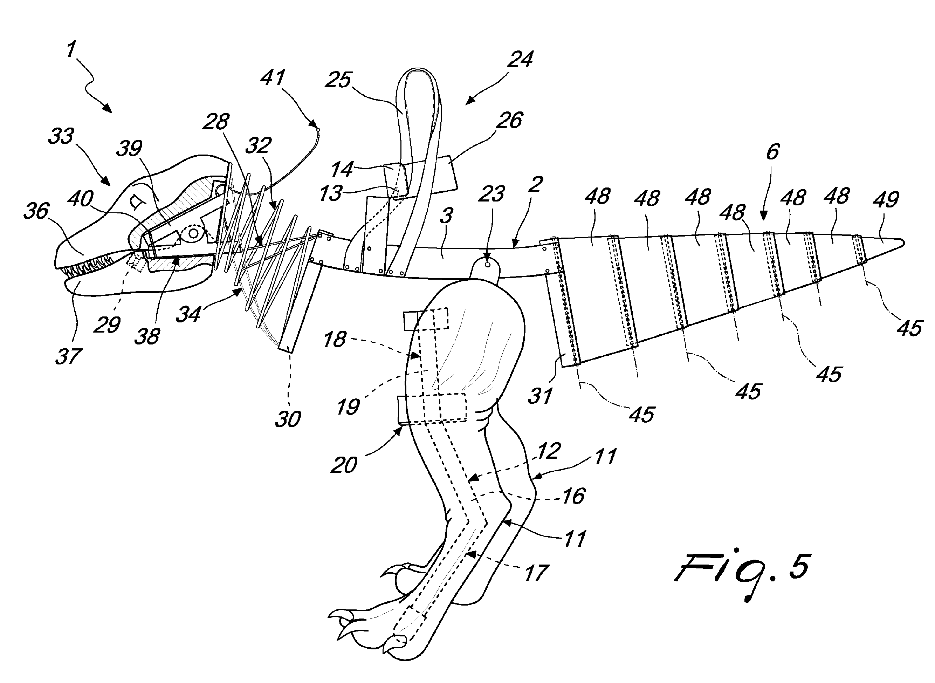

Figure 5 is a side view of the self-propelled puppet shown in the previous figures, with its external covering removed;
Figure 6 is a partially sectional side view of the head of the self-propelled puppet shown in the previous figures, with its jaws closed;
Figure 7 is a partially sectional side view of the head of the self-propelled puppet shown in the previous figures, with its jaws open;
Figure 8 is a partially sectional side view of the tail of the self-propelled puppet shown in the previous figures;
Figure 9 is a plan view from above of the tail of the self-propelled puppet shown in the previous figures;
Figures 10 to 14 are five plan views from above of the self-propelled puppet according to the invention, showing in sequence the movement of the self-propelled puppet and of the rider who rides it about a vertical axis;
Figures 15 to 17 are three side views of the self-propelled puppet, according to the invention, showing in sequence the forward walking movement of the self-propelled puppet.

With reference to the figures, the self-propelled puppet, particularly of the type for simulating a rider astride a bipedal animal, which in the embodiment proposed is generally designated by the reference numeral 1, comprises a supporting structure 2 that is adapted to define the shape and features of an animal or the like, which in this particular embodiment consists of a Tyrannosaurus Rex, and an external covering 4 that covers the supporting structure 2 so as to define the appearance of the animal.

In more detail, in the embodiment proposed, the supporting structure 2 is made of aluminum alloy and is defined substantially by two hoops 30 and 31 which are arranged respectively at the base of the neck 5 and of the tail 6 of the animal represented and are mutually interconnected by two mutually opposite lateral brackets 3 that simulate the rib cage of such animal.

The supporting structure 2 thus defined is such as to delimit internally a compartment 7 that is adapted to accommodate at least partially the body of at least one user 8 who plays the part of a rider astride the animal.

In fact, as will be better described below, the external covering 4 comprises at least two fake human legs 9 that extend at the waist of the user 8 and are arranged laterally to the rib cage of the animal so as to simulate the legs of the above mentioned rider.

According to the invention, the rear limbs 11 of the animal, which are made substantially with splints of polystyrene covered in sponge rubber which are adapted to simulate respectively the bones and the muscles of the rear limbs of a Tyrannosaurus Rex, are associated with at least two stilts 12, extending substantially from the ground and ending proximate to the lower portion of the supporting structure 2 for the support of the user 8.

In this way, it is possible for the user 8 who is standing on the two stilts 12 to move the self-propelled puppet 1.

Conveniently, the supporting structure 2 has openings, respectively, at its upper portion, in such a manner as to make the trunk of the user 8 protrude from the back of the animal, and at the lower portion, so as to allow the free movement of the two stilts 12.

As a consequence, the above mentioned openings are reproduced on the external covering 4 and, according to the proportions of the self-propelled puppet 1 with respect to the user 8, consist of two large openings through which, respectively, the trunk of the user 8 and the two stilts 12 with part of the foot of the user 8 can protrude, as shown in the figures, or can consist of one large opening through which the trunk of the user 8 can protrude and two slits through which the two stilts 12 can protrude thus leaving the foot of the user 8, as well as the fixing leggings of the stilts 12, completely inside the abdomen of the animal represented.

Considering the two stilts 12, these each comprise a rigid body 16 extending advantageously according to a broken line of the open type the individual segments of which are oriented with respect to each other in such a manner as to reproduce substantially the broken-line profile of a limb of an animal, with the vertices of such broken lines arranged substantially proximate to the joints of the rear limb 11 with which the stilt 12 is associated.

More specifically, in the embodiment shown, to simulate the rear limbs of a Tyrannosaurus Rex, the rigid bodies 16, which define the two stilts 12, are both extended along a broken line of the open type with three segments, so as to reproduce substantially the broken-line profile of a limb of a terrestrial animal constituted by a first femur portion, a second tibiofibular portion, and a third end portion.

Advantageously, the end segments 17 of the rigid bodies 16, which are intended to come into contact with the ground, are associated rigidly with the end parts of the two rear limbs 11, for example by way of four pins 10 that are associated with the polystyrene bones of the two rear limbs 11, in such a manner as to be able to move these two rear limbs 11 at each step the user 8 makes by way of the two stilts 12.

However, the other segments of the rigid bodies 16 are disengaged from the other parts of the two rear limbs 11.

Moreover, the initial segments 18 of the rigid bodies 16 can be associated rigidly with the shins 19 of the user 8, by way of two leggings rigidly connected to the stilts 12, and have resting platforms 20 that can be associated with the feet of the user 8 so that the knees of the user 8 are arranged substantially at the height of the hip joints of the animal while remaining free from them.

In this manner, as will be better described below, it is possible to enable the extension and/or the bending of the rear limbs 11 of the animal, at each step the user 8 makes by way of the two stilts 12.

Conveniently, the two stilts 12 are positioned at the internal part of the rear limbs 11 in such a way as to remain constantly hidden from view by third parties who are located laterally to the self-propelled puppet 1, by the lateral thickness of the rear limbs 11 themselves.

The two rear limbs 11 are instead associated with the supporting structure 2 by way of two spherical joints 23, which define the hip joints of the animal so as to simulate the natural articulation of a limb of an animal.

Advantageously, means 24 are provided for the user 8 to support the supporting structure 2 so as to discharge the weight of the self-propelled puppet 1 onto either or both of the shoulders and the waist of the user 8.

In more detail, the supporting means 24 comprise a harness that is constituted by two straps 25 and a corset 26, of which the first are associable with the supporting structure 2 and wearable by the user 8 in such a manner as to cross over behind the back of the user 8.

Moreover, the supporting structure 2 comprises at least one supporting bar 27 that is oriented transversely to the longitudinal axis of the animal and which has a substantially arched shape structure, so as to simulate the transverse curvature of the back of the animal.

Advantageously, the supporting bar 27 is adapted to engage the corset 26, for example by way of hooks 13 and a plate 14 that is integral with the supporting bar 27, so as to define a substantially rigid coupling between the supporting structure 2 and the waist of the user 8.

In this manner, as will be better described below, it is possible to rotate the supporting structure 2 upon each torsion of the trunk of the user 8.

As already mentioned previously, in the particular embodiment proposed, the self-propelled puppet 1 represents a bipedal animal and, more specifically, a Tyrannosaurus Rex.

Obviously, the kinetic mechanism described up to now, which is constituted substantially by the supporting structure 2, by the two rear limbs 11 and by the two stilts 12, can be used without any modification for the reproduction, in its appearance and motion, of a bipedal animal, for example, selected from the group constituted by: Jurassic and Cretaceous reptiles, Jurassic and/or present-day birds, mythological creatures, fantastic creatures and theropod animals in general.

Similarly, with suitable modifications, what has been described up to now can also be used for providing a self-propelled puppet that is adapted to represent a quadruped animal ridden by two riders, such as for example an equine animal, a bovine animal, a camelid animal or any other animal/creature whose anatomy lends itself to accommodating a plurality of kinetic mechanisms like the one described, arranged mutually in series.

In fact, by providing a supporting structure that is adapted to accommodate two users each one of whom is provided with a pair of stilts, and relying on the degree of synchronization of the two users, it is possible to provide any quadruped animal, thus bringing such other embodiments within the inventive concept of the present invention.

Returning now to the proposed embodiment, considering the external covering 4 of the self-propelled puppet 1, this is made mainly of a scaled imitation leather fabric, which is adapted to render the outer hide of the animal to resemble that of a reptile as convincingly as possible, and has characteristics of high elasticity in order to, as will be better described below, enable the movements of the self-propelled puppet 1 to be as natural and convincing as possible.

The supporting structure 2 and the rear limbs 11 are therefore covered with such fabric which, in addition, can have shades of color that are adapted to reproduce the natural colors of the Tyrannosaurus Rex represented and are adapted to simulate/accentuate, with shading, the various muscular bulges/curves that a Tyrannosaurus Rex might actually have had.

To complete the trunk of the animal represented, two front limbs 15 are provided which, as with the rear limbs 11, can be made with a form of polystyrene bone structure covered with sponge rubber in order to add volume to them.

Advantageously, the front limbs 15 are not provided with kinetic mechanisms but are free to swing as a consequence of the movement of the self-propelled puppet 1 thus reproducing the assumed natural motion of a Tyrannosaurus Rex.

In order to further integrate the figure of the rider with that of the Tyrannosaurus Rex represented by the self-propelled puppet 1, on the trunk of the animal and the like a saddle 21 is defined, provided with a blanket 22, which is adapted to conceal the edges of the upper opening 13 from which the user 8 protrudes.

The saddle 21 is provided with brackets 56 that are associated with the fake human legs 9 mentioned above and are adapted to hold the latter firmly against the rib cage of the animal, thus preventing them from starting to swing and thus assume unnatural movements.

Moreover it should be noted that both the saddle 21 and the trousers worn by the fake human legs 9 are made in such a manner as to enable the latter to be partially enveloped around the waist of the user 8 thus concealing from sight the fact that the real body of the user 8 extends inside the trunk of the animal represented by the self-propelled puppet 1 and that he is not riding on the back of the self-propelled puppet 1.

As previously described, the neck 5 of the animal extends from the front hoop 30 of the supporting structure 2.

The neck 5 is provided by an elastic support 32 that is such as to define a substantially truncated cone geometry, converging in the direction of the head 33 of the animal, and is covered by a layer of sponge rubber and by the previously described fabric that is adapted to define the hide of the animal.

The function of the elastic support 32, which can be defined for example by a helical spring, is to allow the swinging of the head 33 of the animal following the movement of the self-propelled puppet 1 and/or following explicit manipulations of the user 8, as will be better described below.

In order to limit the swinging of the head 33 of the animal in a controlled manner and in order to support the weight thereof, while preventing this from leading to the neck 5 of the animal bending, in order to reproduce the actual motion of a Tyrannosaurus Rex, further elastic supports 34 are provided, consisting for example of support springs that extend from the lower base of the front hoop 30 and reach the upper joint of the head 33 of the animal.

In addition to such further elastic supports that are adapted to dampen the oscillations of the neck 5 while keeping it straight when it is not subject to stresses, a corresponding number of stays 28 are provided connected to the upper base of the front hoop 30 and to an intermediate point of the elastic supports 34, so as to support the weight of the head 33 of the animal.

Considering the head 33 of the animal, this is also provided by a polystyrene structure covered by sponge rubber and by the fabric adapted to simulate the hide of the Tyrannosaurus Rex.

Advantageously, in the head 33 the maxilla 36 and the mandible 37 are made in two separate pieces and are mutually hinged in order to simulate the mandibular articulation of the animal.

In more detail, inside the head 33 of the animal and, more precisely, at the mandibular joint of the head 33, there are means 38 for opening the jaws of the animal which are manually controlled by the user 8.

The opening means 38 substantially consist of a clamp 39 that is provided with the two arms that comprise it and are associated rigidly with the parts that define, respectively, the maxilla 36 and the mandible 37 of the animal.

In this way, the opening and closing of such clamp 39 command, respectively, the opening and closing of the jaws of the animal.

In order to enable the manipulation of the clamp 39, an elastic return element 40 is provided which is adapted to keep the clamp 39 closed and thus the jaws of the animal in the rest condition, and a control wire 41 provided with sheath 42 is associated with the other two ends of the clamp 39 and can be actuated directly by the user 8.

For example, the elastic return element 40 can be provided by an elastic band around two ends of the two arms of the clamp 39 or by a needle spring fitted over the hinge point of the clamp 39.

In this way, the user 8, by pulling the control wire 41 with one hand while holding the sheath 42 with the other hand, can open the jaws of the animal at will.

To complete the head 33 of the animal, reins 43 and a bit 44 are provided which are adapted to allow the manipulation of the orientation of the head 33 by the user 8.

Advantageously, the control wire 41 and the sheath 42 are inserted inside the reins 43 while remaining substantially concealed from view.

In this way, the user 8 can manipulate the orientation of the head 33 of the animal at will simply by acting on the reins 43 and, as needed, pull the control wire 41 in order to cause the opening of the jaws of the animal, in contrast with the elastic action of the elastic return element 40.

Moreover, as will be better described below, upon the release of the control wire 41 by the user 8, the elastic return element 40 causes the immediate closing of the clamp 39 thus simulating a bite of the animal.

Finally, a loudspeaker 29 can be provided which is adapted to reproduce the sound of the animal represented.

Conveniently, such reproduced sound can be synchronized with the opening of the jaws of the animal represented, by way of adapted switches or stroke limit associated with the clamp 39.

As previously described, the tail 6 of the animal extends from the rear hoop 31 of the supporting structure 2.

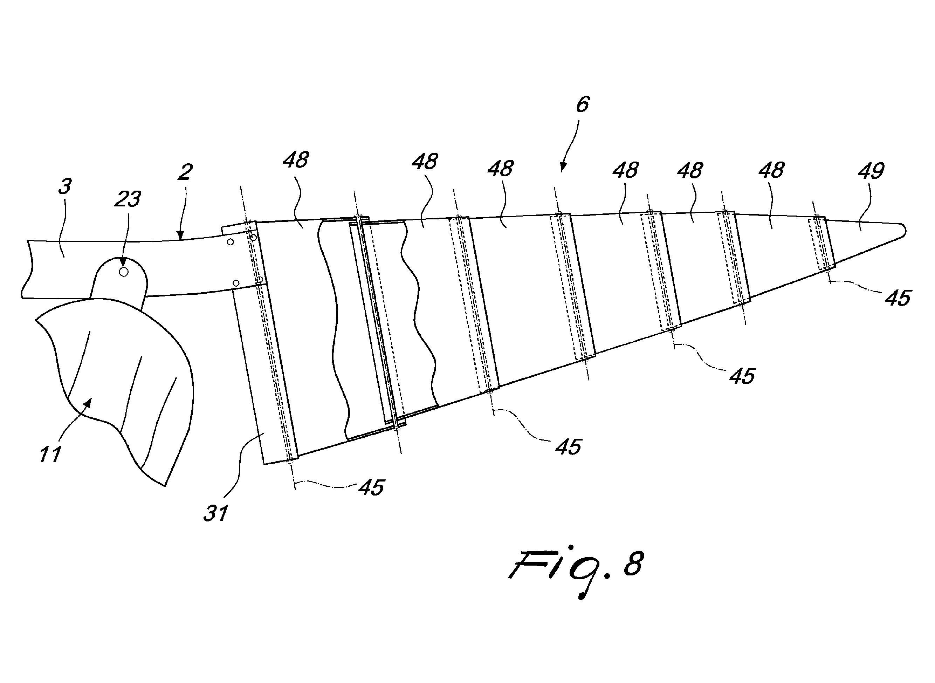

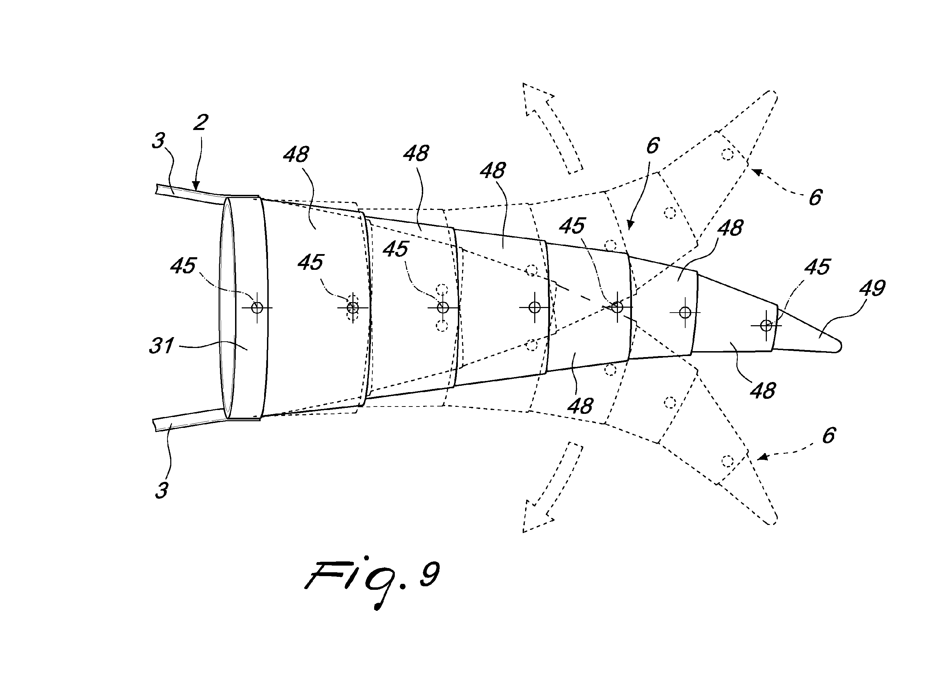

With particular reference to Figures 8 and 9, the tail 6 is provided by an articulated arm with a substantially conical general shape structure that has the various pivoting axes 45, which are defined between one segment thereof and the next, and are substantially perpendicular to the longitudinal axis of the animal, so as to simulate the movement of a tail provided with a vertebral column.

In more detail, such articulated arm is defined by a plurality of truncated cones 48 made of plastic material and of progressively decreasing size so as to be able to be inserted inside each other, with the end of one truncated cone 48 overlapping and containing the start of the next truncated cone 48.

Conveniently, the first truncated cone 48 is integrally associated with the rear hoop 31, and the last segment of the articulated arm is defined by a cone 49 made of plastic material and inserted in the last truncated cone 48 so as to define the tip of the tail 6.

More specifically, the various hinging points, defined between the individual segments of the articulated arm simulating the tail 6 of the animal, are provided by hinging pins that pass through the individual segments at their overlapping portions from one side to the other.

As with the rest of the body of the self-propelled puppet 1, the tail 6 is also covered by the fabric adapted to simulate the hide of the Tyrannosaurus Rex which, thanks to its previously mentioned elastic characteristics, makes it possible for the articulated arm just described to describe oscillations about its completely extended position.

In this way, as will be better described below, it is possible to simulate a wagging of the tail 6 of the self-propelled puppet 1, thus reproducing the actual motion of a Tyrannosaurus Rex.

Operation of the self-propelled puppet 1, particularly of the type for simulating a rider astride a bipedal animal, is described below.

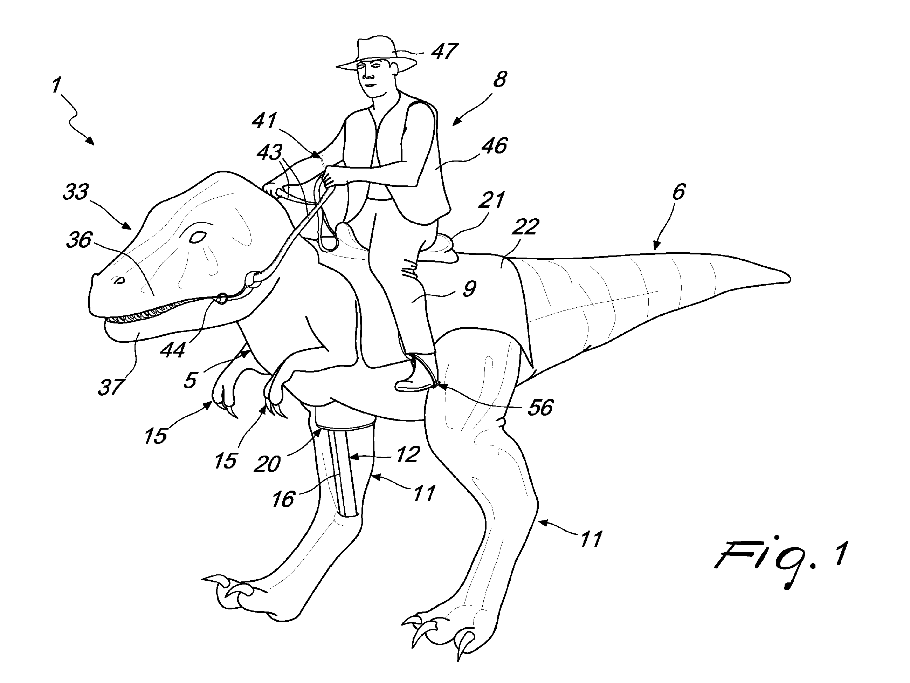

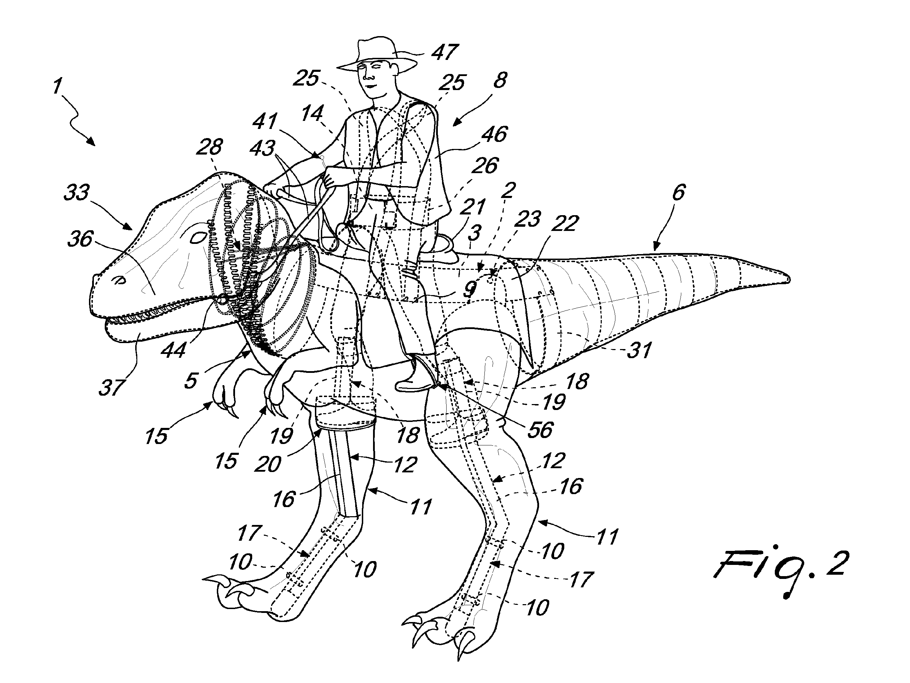

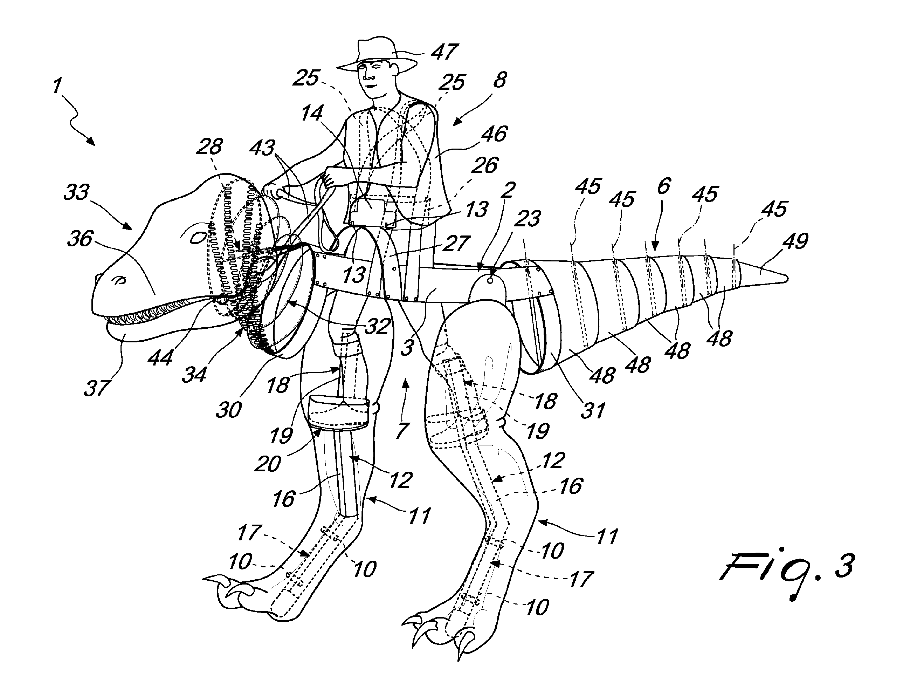

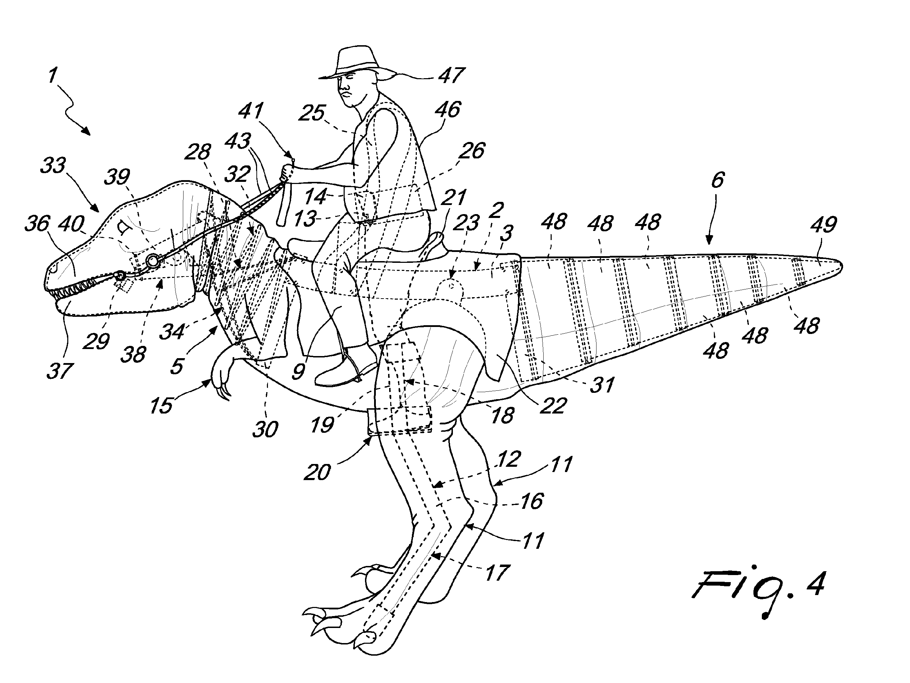

With particular reference to Figures 1 to 4, once the user 8 has entered the self-propelled puppet 1 by availing of a suitable supporting framework which for the sake of graphic simplicity is not shown, he/she gets into position in the stilts 12 and secures his/her legs to the leggings with which the stilts 12 are provided.

At the same time, the user 8 dons the harness constituted by the two straps 25 and the corset 26, hooking the latter, by way of the hooks 13, to the plate 14 which, as mentioned previously, is integral with the supporting bar 27 of the supporting structure 2.

Once the user 8 has been secured to the self-propelled puppet 1 by way of the elements described above, both user and animal are then covered by way of decorative accessories such as: the trousers worn by the fake human legs 9 which are adapted to cover, with their upper part, the corset 26 and the plate 14, and a jacket 46 adapted to cover the straps 25.

In the embodiment proposed, the user 8 plays the part of a dinosaur tamer and, in order to render the character as convincing as possible, the jacket 46 is a waistcoat and the user 8 is provided with a cowboy hat 47.

Once the operations described above have been carried out, the user 8 takes hold of the reins 43 which, as mentioned previously, conceal the control wire 41 and the sheath 42, releases the self-propelled puppet 1 from the supporting framework and is ready to begin the entertainment show.

During such show, the user 8, who in essence is a stilt-walker playing the part of an animal tamer, begins moving the self-propelled puppet 1, making it walk forwards, backwards, move sideways, turn around, lean forward, lean backward, and can open and close the jaws of the animal at will.

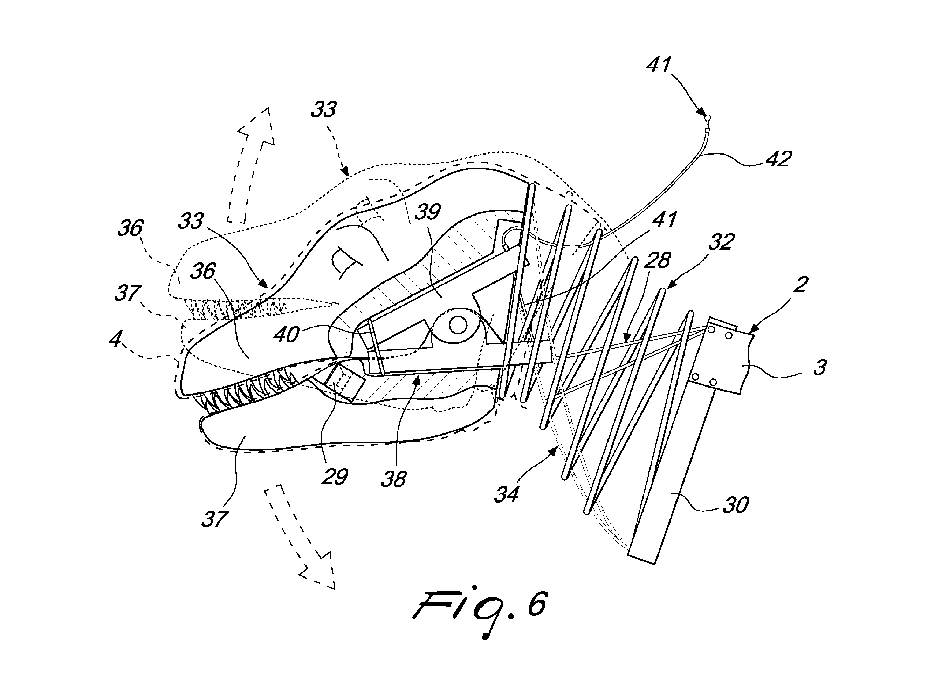

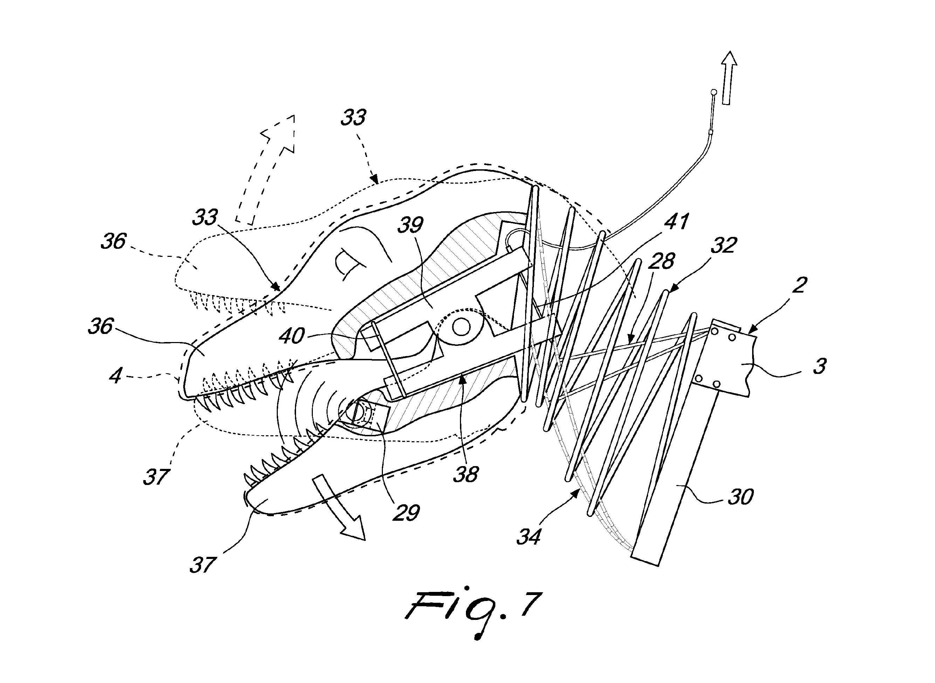

As previously noted, with particular reference to Figures 6 and 7, by pulling the reins 43 to the right and/or left or even towards himself/ herself, the user 8 can manipulate the head 33 of the animal by defeating the elastic contrast offered by the elastic supports 32 and 34, which, once the reins 43 are no longer pulled, elastically return the head 33 to its resting position, thus very convincingly reproducing the motion of the Tyrannosaurus Rex represented.

At the same time as, or indeed without, moving the head 33, the user 8 can pull the control wire 41 with one hand while holding the sheath 42 steady with the other hand so as to open the jaws of the animal.

In order to close such jaws, it is sufficient to release the control wire 41 in order to allow the clamp 39 associated with the maxilla 36 and with the mandible 37 of the head 33 to close.

Conveniently, if the user 8 wishes to simulate a bite of the Tyrannosaurus Rex, it is sufficient to suddenly release the control wire 41 thus making the clamp 39 snap closed.

Differently, if the user 8 wishes to simulate a gradual opening/closing, it is sufficient to gradually pull/release the control wire 41.

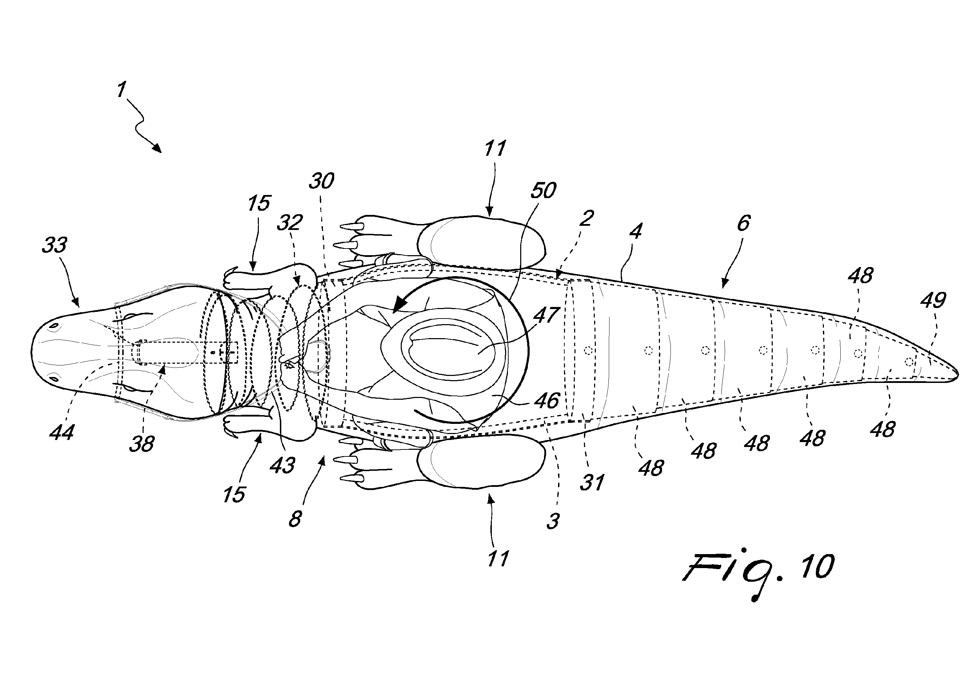

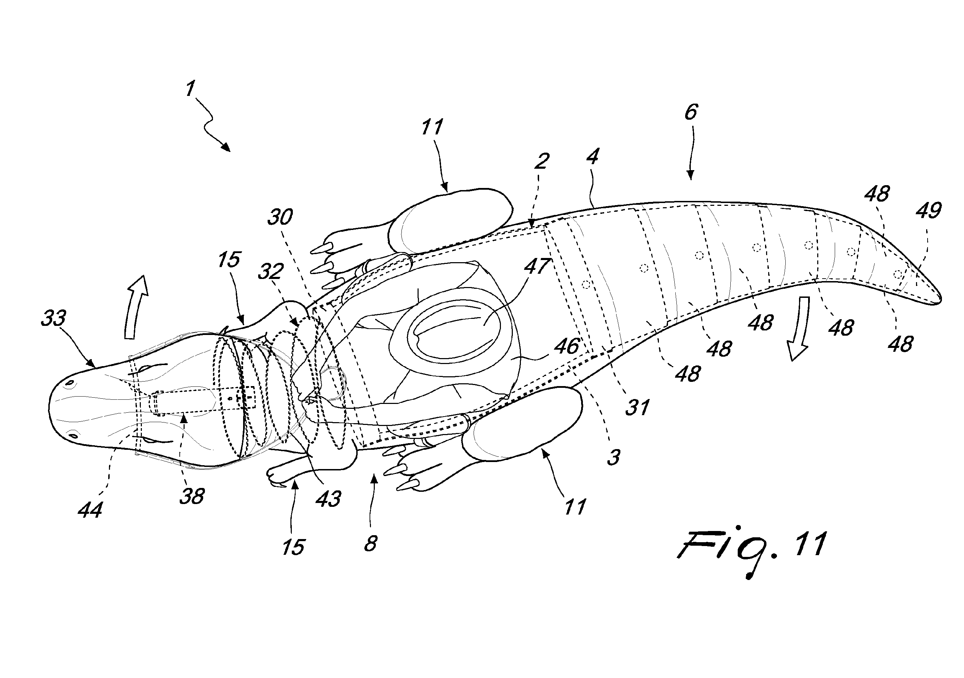

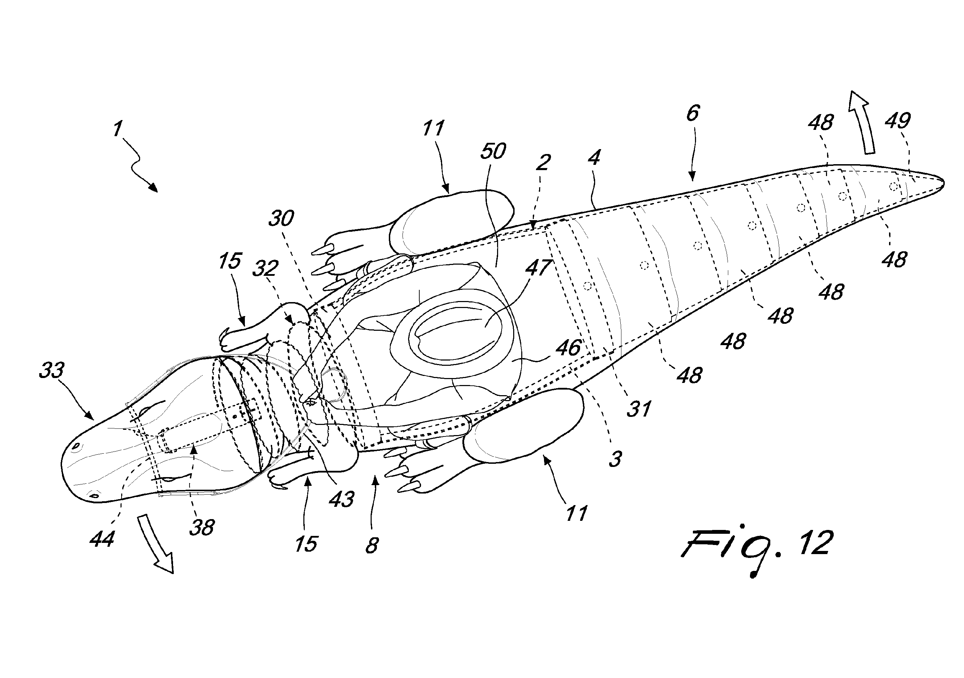

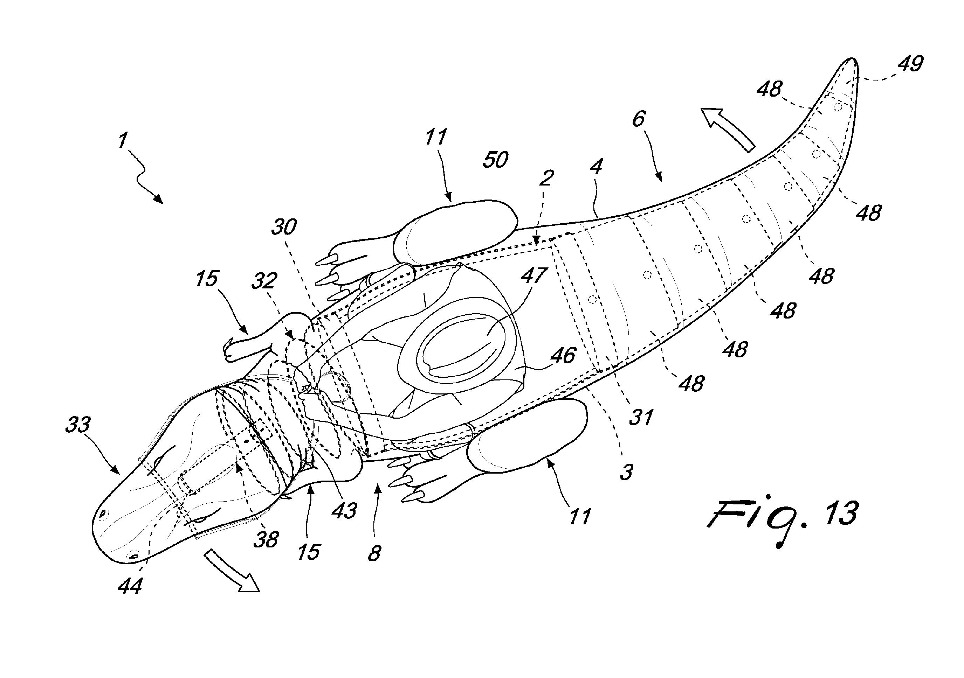

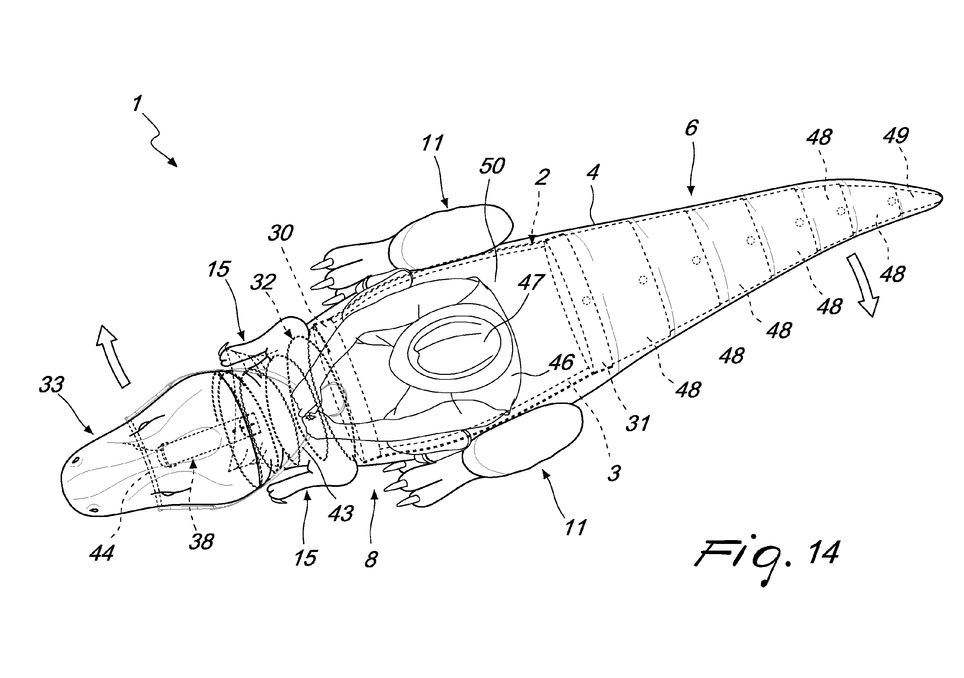

With particular reference to Figures 10 to 14, if the user wishes to turn the self-propelled puppet 1 around about its own vertical axis, it is sufficient to impose torsion on his/her trunk in such a manner as to make the animal yaw.

In fact, thanks to the coupling provided between the corset 26 and the supporting bar 27, by way of the hooks 13 and the plate 14, the torsion of the trunk of the user 8 is directly transmitted to the supporting structure 2 which in turn transmits it to the neck 5 and to the head 6 of the animal.

In more detail, as shown in Figures 10 to 14, a torsion or a turn performed with the stilts 12, shown schematically with the arrow designated with the reference numeral 50, lead to the rotation of the supporting structure 2 and as a consequence also of the neck 5 and of the tail 6.

However, since these latter elements are articulated and elastically yielding, by way of their moment of inertia, they will initially try to maintain the initial position and orientation, in order to then catch up with the rotation of the supporting structure 2 later.

Also thanks to their moment of inertia and to the fact that these are articulated and elastically yielding elements, such catching-up will cause a greater rotation of the neck 5 and of the tail 6 than that of the supporting structure 2.

Such greater rotation will however be contrasted by the elastic return of such articulated elements, until this elastic return wins and returns the neck 5 and the tail 6 in line with the supporting structure 2.

In this manner a genuine oscillation of the neck 5 and of the tail 6 is achieved, thus simulating a swinging of the head 33 and/or a wagging of the tail 6 and thus reproducing, very convincingly, the motion of the Tyrannosaurus Rex represented.

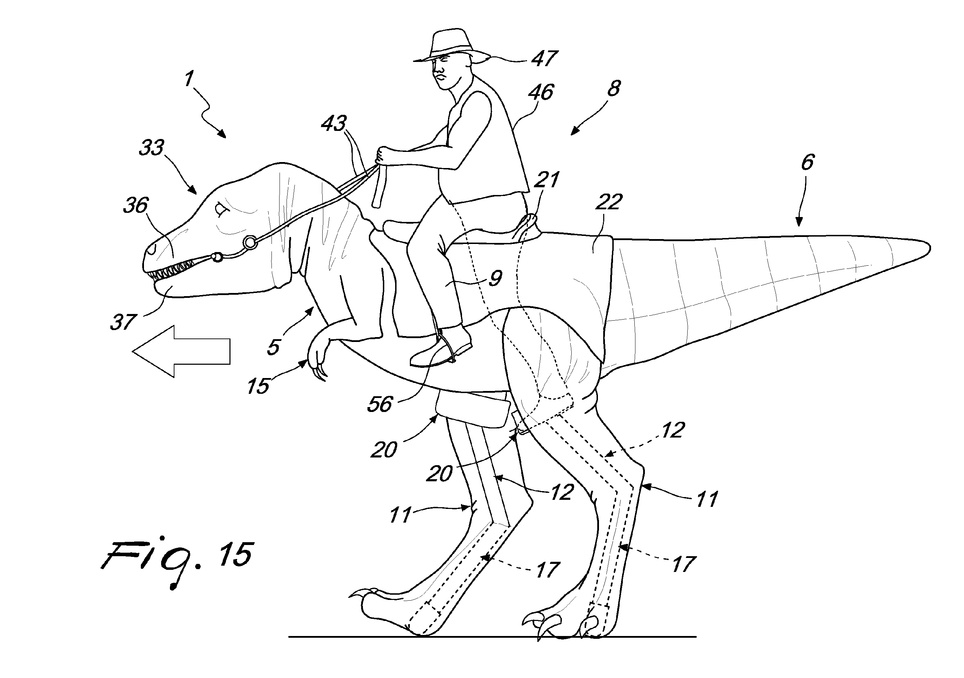

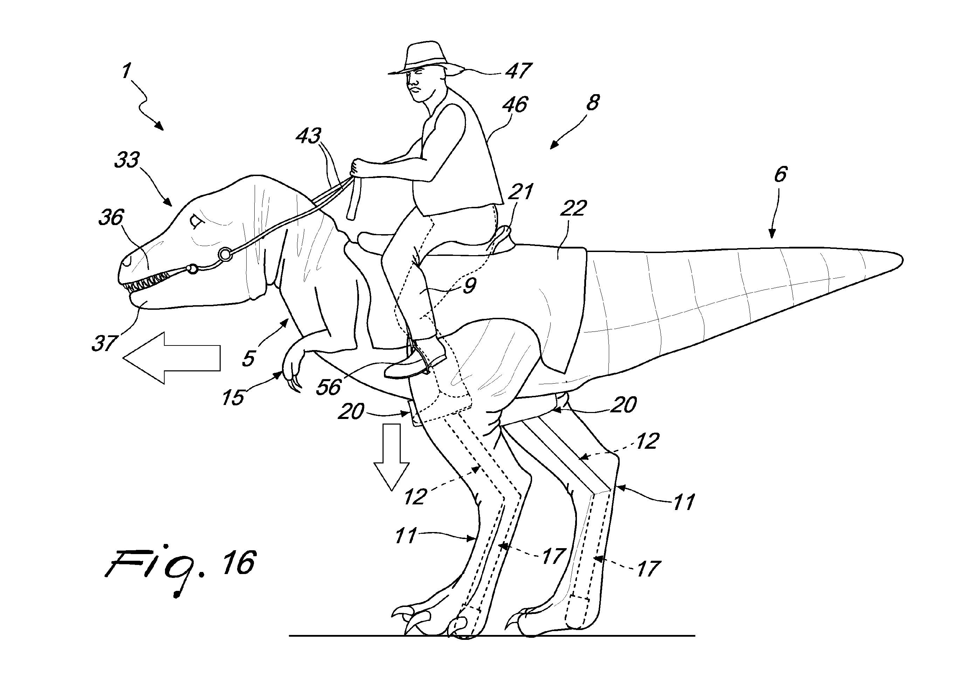

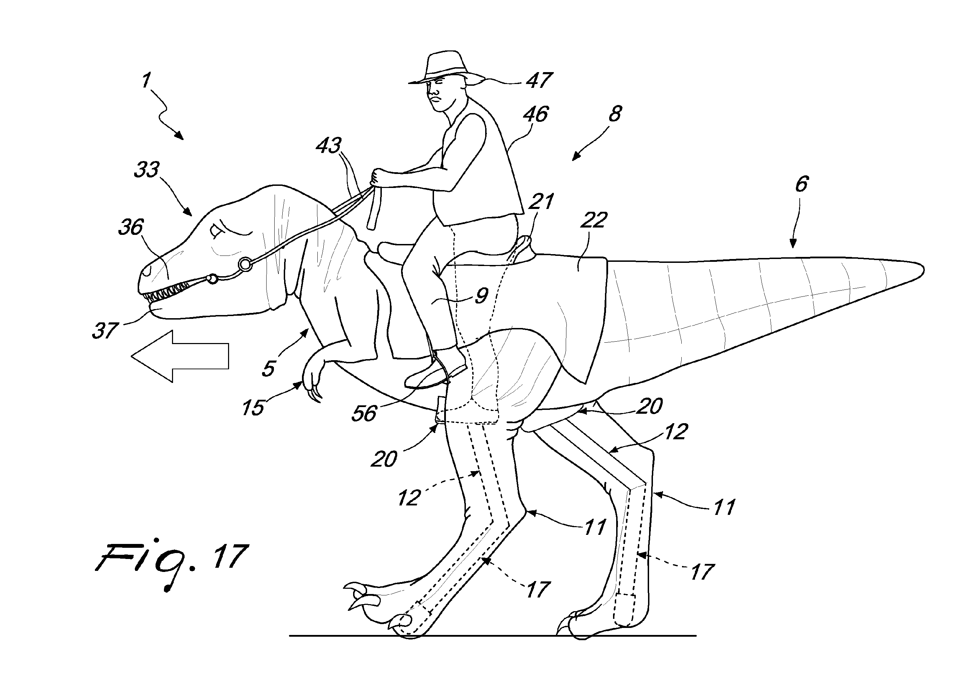

With regard to the advancement or retreat of the self-propelled puppet 1, with particular reference to Figures 15 to 17, starting for example from a rearward placement of the leg of the user 8, as shown in Figure 15, by pulling forward and bending his/her leg, the stilt 12, and thus the rear limb 11 of the self-propelled puppet 1, is made to advance, leading the rear limb 11 to first bend, and then extend, owing to the eccentricity defined between the point of instantaneous rotation of the leg of the user 8 and the ball joint 23 simulating the articulation of the thigh of the rear limb 11 involved.

In practice it has been found that the self-propelled puppet, particularly of the type for simulating a rider astride a bipedal animal, according to the invention, fully achieves the set aim and objects, in that it enables the representation/simulation of creatures and/or animals in an extremely convincing manner, from the point of view both of features and of motion.

In particular, it should be noted that the use of two stilts for the simulation of the legs of the animal represented, a peculiarity that is not present in the known art and which offers possibilities for control and manipulation that do not exist in the known art, and the presence of a stilt-walker user who is acting the part of an animal tamer/rider and is arranged with the head outside the puppet, make it possible for the user to have a 360° view of the outside environment that surrounds him/her.

This freedom of view of the outside environment makes it possible to constantly monitor everything, including persons and/or objects, that surrounds the puppet so as to enable the user to optimize the control of the puppet, while limiting, if not eliminating, the possibility of making erroneous maneuvers that cause the puppet to collide with persons and/or objects.

Another advantage of the self-propelled puppet, according to the present invention, consists in that it allows the user to assume comfortable and relaxed postures that do not tire him/her excessively, thus being easy and safe use.

Another advantage of the self-propelled puppet, according to the present invention, consists in that it does not excessively tire the user, thanks to the fact that it is made with extremely light materials, so as to enable an extended use thereof over time.

Another advantage of the self-propelled puppet, according to the present invention, consists in that it represents a form of entertainment that is extremely safe.

Another advantage of the self-propelled puppet, according to the present invention, consists in that it can be provided with materials and elements that are present on the market at low cost.

The self-propelled puppet, particularly of the type for simulating a rider astride a bipedal animal, according to the invention, thus conceived, is susceptible of numerous modifications and variations, all of which are within the scope of the appended claims.

Moreover, all the details may be substituted by other, technically equivalent elements.

In practice the materials employed, and the contingent dimensions and shapes, may be any according to requirements and to the state of the art.

The disclosures in Italian Patent Application No. AR2013A000044 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A self-propelled puppet (1), particularly of the type for simulating a rider astride a bipedal animal, comprising a supporting structure (2) that is adapted to define the shape and features of an animal or the like and an external covering (4) that covers said supporting structure (2) so as to define the appearance of said animal or the like, said supporting structure (2) delimiting internally a compartment (7) adapted to accommodate at least partially the body of at least one user (8) who plays the part of a rider astride said animal or the like, **characterized in that** it comprises at least two stilts (12) associated with the rear limbs (11) of said animal or the like, extending substantially from the ground and ending proximate to the lower portion of said supporting structure (2) for the support of said at least one user (8) so as to allow the movement of said self-propelled puppet (1) by said at least one user (8) who is standing on said at least two stilts (12), said supporting structure (2) having openings respectively at its upper portion, so as to make the trunk of said at least one user (8) protrude from the back of said animal or the like, and at said lower portion, so as to allow the free movement of said at least two stilts (12), said external covering (4) comprising at least two fake human legs (9) that extend at the waist of said at least one user (8) and are arranged laterally to the rib cage of said animal or the like so as to simulate the legs of said rider.

2. The self-propelled puppet (1) according to claim 1, **characterized in that** each one of said at least two stilts (12) comprises a rigid body (16) that is extended along a broken line of the open type, the individual segments of which are oriented with respect to each other in such a manner as to reproduce substantially the broken-line profile of a limb of an animal, the vertices of said broken lines, along which said at least two stilts (12) extend, being arranged substantially proximate to the joints of said rear limbs (11) and at the internal part of said rear limbs (11) so that said at least two stilts (12) remain constantly hidden from view by third parties located laterally to said self-propelled puppet (1) by the lateral thickness of said rear limbs (11).

3. The self-propelled puppet (1), according to claims 1 or 2, **characterized in that** the end segments (17) of said rigid bodies (16), intended to come into contact with the ground, are associated rigidly with the end parts of said rear limbs (11) so as to be able to move said rear limbs (11) at each step of said at least one user (8) made by way of said at least two stilts (12), the other segments of said rigid bodies (16) being disengaged from the other parts of said rear limbs (11).

4. The self-propelled puppet (1) according to one or more of the preceding claims, **characterized in that** the initial segments (18) of said rigid bodies (16) can be associated rigidly with the shins (19) of said at least one user (8) and have resting platforms (20) that can be associated with the feet of said at least one user (8) so that the knees of said at least one user (8) are arranged substantially at the height of the hip joints of said animal or the like, while remaining free from them, so as to allow the extension and/or bending of said rear limbs (11) at each step of said at least one user (8) made by means of said at least two stilts (12).

5. The self-propelled puppet (1) according to one or more of the preceding claims, **characterized in that** said rear limbs (11) are associated with said supporting structure (2) by way of two spherical joints (23), which define the hip joints of said animal or the like, so as to simulate the natural articulation of a limb of an animal.

6. The self-propelled puppet (1) according to one or more of the preceding claims, **characterized in that** said rigid bodies (16), which define said at least two stilts (12), are both extended along a broken line of the open type with three segments, so as to reproduce substantially the broken-line profile of a limb of a terrestrial animal constituted by a first femur portion, a second tibiofibular portion, and a third end portion.

7. The self-propelled puppet (1) according to one or more of the preceding claims, **characterized in that** it comprises means (24) for supporting said supporting structure (2) on said at least one user (8) so as to discharge the weight of said self-propelled puppet (1) on either or both of the shoulders and the waist of said at least one user (8).

8. The self-propelled puppet (1) according to one or more of the preceding claims, **characterized in that** said supporting means (24) comprise a harness (25, 26), which can be associated with said supporting structure (2) and can be worn by said at least one user (8).

9. The self-propelled puppet (1) according to one or more of the preceding claims, **characterized in that** said supporting structure (2) comprises at least one supporting bar (27) that is oriented transversely to the longitudinal axis of said animal or the like and is adapted to engage a corset (26), which is part of said harness (25, 26), so as to define a substantially rigid coupling between said supporting structure (2) and the waist of said at least one user (8), so as to be able to rotate said supporting structure (2) upon each torsion of the trunk of said at least one user (8).

10. The self-propelled puppet (1) according to one or more of the preceding claims, **characterized in that** it reproduces, in its appearance and motion, a bipedal animal selected from the group constituted by: Jurassic or Cretaceous reptiles, Jurassic and/or present-day birds, mythological creatures and fantastic creatures and theropod animals in general.
